# EUROPÄISCHE PATENTANMELDUNG

(11) **EP 3 451 243 A1**
(43) Veröffentlichungstag der Anmeldung: **06.03.2019**
(21) Anmeldenummer: 17188165.9
(22) Anmeldetag: 28.08.2017
(51) Int. Cl.: G06Q 10/00, G06Q 50/08

(54) **KLASSIFIZIERUNG MINDESTENS EINES ELEMENTES MIT MINDESTENS EINER UNBESTIMMTEN EIGENSCHAFT**

(71) Anmelder: Siemens Aktiengesellschaft, 80333 München (DE)
(72) Erfinder: Klein, Wolfram, 85579 Neubiberg (DE); Mayer, Hermann Georg, 83209 Prien am Chiemsee (DE)

(57) **Zusammenfassung**

Die Erfindung betrifft ein Computer-implementiertes Verfahren zur Klassifizierung mindestens eines Elementes (10) mit mindestens einer unbestimmten Eigenschaft (20), aufweisend die folgenden Schritte Lesen eines Plans (32, 34, 36) umfassend das mindestens eine Element (10) mit der mindestens einen unbestimmten Eigenschaft (20) und Bestimmen der mindestens einen unbestimmten Eigenschaft (20) des mindestens einen Elementes (10) basierend auf mindestens einem Klassifizierungshinweis (40). Ferner ist die Erfindung auf ein entsprechendes Computerprogrammprodukt sowie eine Vorrichtung gerichtet.

## Beschreibung

### 1. Technisches Gebiet

Die vorliegende Erfindung betrifft ein Verfahren zur Klassifizierung mindestens eines Elementes mit mindestens einer unbestimmten Eigenschaft. Ferner ist die Erfindung auf ein entsprechendes Computerprogrammprodukt sowie eine Vorrichtung gerichtet. Die Erfindung ist insbesondere in den Bereichen der Gebäudetechnik und der Fabrikplanung angesiedelt.

### 2. Stand der Technik

Klassifizierungsverfahren zur Klassifizierung unterschiedlicher Objekte oder Elemente sind in vielfältiger Zahl aus dem Stand der Technik bekannt. Üblicherweise wird die Klassifizierung der Elemente manuell durchgeführt, beispielsweise die Klassifizierung von Räumen in einem Gebäude.

Grundsätzlich übergibt bei der manuellen Klassifizierung ein Gebäudebetreiber die Baupläne als Ausdruck oder Datei einem Dienstleister, wie einem Brandschutzexperten. Die Baupläne werden im Folgenden auch als Gebäudepläne bezeichnet. Der Dienstleister geht daraufhin Schritt für Schritt die Räume einzeln durch und versucht anhand jeweiliger Kontextinformationen auf die Nutzung oder den Typ der Räume zu schließen. In der Regel gibt es hierfür Anhaltspunkte. Die Anhaltspunkte sind im einfachsten Fall textuelle Informationen, welche auf die Raumnutzung oder den Raumtyp schließen lassen. Das Wort "Küche" in einem Raum des Gebäudeplans deutet auf die Nutzung des Raums als Küche hin etc.

Nachteilig an dieser manuellen Klassifizierung ist jedoch, dass unterschiedliche Dienstleister nicht zum selben Ergebnis gelangen. Oftmals erfolgt kein Austausch zwischen den Dienstleistern. Ferner wird die Klassifizierung häufig ohne Kontextinformationen oder unabhängig durch unterschiedliche Dienstleister vorgenommen. Dies führt meist zu Redundanzen und inkonsistenten Ergebnissen der Klassifizierung.

Durch die mangelhaft oder fehlerhaft klassifizierten Gebäudepläne kann die Sicherheit von Personen innerhalb des Gebäudes nicht hinreichend gewährleistet werden. Beispielsweise werden Feuermelder und Fluchtwege durch Brandschutzexperten falsch platziert. Dadurch kann es im Brandfall zu gravierenden Personenschäden und Sachschäden kommen.

Die vorliegende Erfindung stellt sich daher die objektive technische Aufgabe ein Verfahren zu Klassifizierung bereitzustellen, welches effizient und zuverlässig ist.

### 3. Zusammenfassung der Erfindung

Die oben genannte Aufgabe wird erfindungsgemäß durch ein Computer-implementiertes Verfahren zur Klassifizierung mindestens eines Elementes mit mindestens einer unbestimmten Eigenschaft gelöst, aufweisend die folgenden Schritte:
a. Lesen eines Plans umfassend das mindestens eine Element mit der mindestens einen unbestimmten Eigenschaft und
b. Bestimmen der mindestens einen unbestimmten Eigenschaft des mindestens einen Elementes basierend auf mindestens einem Klassifizierungshinweis.

Dementsprechend ist die Erfindung auf die Klassifizierung eines oder mehrerer Elemente gerichtet. Das Element kann ein Gebäude, ein Raum, ein Einrichtungsgegenstand oder ein sonstiges Objekt sein, welches eindimensional oder mehrdimensional ist.

Der Raum enthält atomare, eindeutig identifizierbare Elemente, wie beispielsweise Tische oder Stühle anhand deren der Raum klassifiziert werden kann. Der Einrichtungsgegenstand als solcher wird hingegen lediglich zur Klassifizierung verwendet. Die Klassifizierung bei dem Einrichtungsgegenstand kann nur vorgenommen werden, wenn er auch atomare Elemente enthält, wie Baupläne eines Möbelstücks mit Schubläden, Tischbeinen etc.

Ferner wird das Element innerhalb eines übergeordneten Objekts in eine Hierarchie oder Topologie eingeordnet. Beispielsweise sind der Raum und die weiteren Elemente in einem Gebäude angeordnet. Mit anderen Worten, enthält das Gebäude die Räume, welche über einen Gang verbunden sind. Einer der Gänge führt beispielsweise in einen Waschraum, welcher mehrere Kabinen enthält etc. Einer der Räume beinhaltet wiederum bestimmte Unterelemente, wie Wände, Fenster und Türen etc.

Ferner weist das Element ein oder mehrere Eigenschaften auf. Beispielsweise kann ein Raum durch die Eigenschaften seines Typs bzw. seiner Nutzung, wie Bürozimmer, Esszimmer, Schlafzimmer gekennzeichnet sein.

Diese Eigenschaften sind unbestimmt, mit anderen Worten, durch die Klassifizierung zu bestimmen. Der beispielhafte Raum hat einen unbestimmten Typ und/oder weitere unbestimmte Eigenschaften, welche in einem Plan entsprechend seiner Nutzung bestimmt werden.

In einem ersten Schritt wird ein Plan eingelesen. Der Plan ist zum Beispiel ein Gebäudeplan, welcher Stockwerke umfasst. Jedes Stockwerk hat entsprechende Elemente, nämlich Räume sowie Gänge zwischen den Räumen. Jedes Stockwerk kann als ungerichteter oder gerichteter Graph realisiert sein, wobei die Knoten beispielsweise des ungerichteten Graphs durch die Räume und die Kanten durch die Gänge repräsentiert werden.

In einem zweiten Schritt wird die mindestens eine unbestimmte Eigenschaft des Elementes anhand mindestens eines Klassifizierungshinweises bestimmt. Der Klassifizierungshinweis ist ein Hinweis oder Anhaltspunkt, welcher auf die Eigenschaft des Elementes hindeutet. Hierzu liefern Kontextinformationen oder sonstige Daten in dem eingelesenen Plan Aufschluss auf die konkrete Nutzung oder andere relevante Kriterien zum Klassifizieren des Elementes.

Der Vorteil liegt darin, dass das oben beschriebene Verfahren im Gegensatz zu herkömmlichen manuellen Verfahren gemäß dem Stand der Technik effizienter ist und zuverlässig zu einheitlichen konsistenten Ergebnissen führt. Mit anderen Worten, wird die Eigenschaft des Elementes, wie Raumtyp oder Raumnutzung des Raums effizient und zuverlässig bestimmt. Die Eigenschaften werden maschinenlesbar dargestellt. Daraufhin können weitere automatisierte Algorithmen aufbauen, wie beispielsweise eine Rauchmelderplatzierung. Der Vorteil liegt auch in der verbesserten Interpretation und Qualität der maschinenlesbaren Gebäudepläne

Die verbesserte Klassifizierung der Räume des Gebäudeplans hat zur Folge, dass auch Anwendungen wie beispielsweise im Bereich der Brandschutzeinrichtungen eine erhöhte Sicherheit für den Menschen bieten. Hinsichtlich der Brandschutzeinrichtungen können die Fluchtwege, die Indoor-Navigation für die Platzierung der Rauchmelder etc. mit hoher Zuverlässigkeit und Genauigkeit geplant und umgesetzt werden. Im Fall eines Brands, kann der Personen und Sachschaden minimiert werden.

In einer weiteren Ausgestaltung ist der Plan ein Plan in gedruckter Form oder ein Plan in digitaler Form. Dementsprechend kann der Plan in jeglichen Formaten als Druck oder Datei eingelesen werden. Dadurch ist das Verfahren vorteilhafterweise auf jegliche Datenformate anwendbar und ein Anwender muss sich nicht um zeitaufwendige Konvertierungen bemühen.

In einer weiteren Ausgestaltung, Digitalisieren des Plans in gedruckter Form in einen Plan in digitaler Form, falls der Plan in gedruckter Form eingegeben wird. Dementsprechend wird ein Ausdruck in einem Zwischenschritt zunächst gescannt bzw. zur weiteren Verarbeitung in das gewünschte digitale Format konvertiert.

In einer weiteren Ausgestaltung ist die mindestens eine Eigenschaft ausgewählt aus der Gruppe bestehend aus einem Typ des mindestens einen Elementes, Typ mindestens eines Unterelementes des mindestens einen Elementes und einer Anzahl des mindestens einen Unterelementes. Dementsprechend können unterschiedliche Eigenschaften eines Elementes und entsprechende Unterelemente des Elementes für die Klassifizierung verwendet werden. Beispielsweise sind die Eigenschaften des Raums sowie Eigenschaften der kennzeichnenden Elemente, wie Anzahl oder Beschaffenheit der Wände, Türen, Fenster etc. zu nennen.

In einer weiteren Ausgestaltung wird der mindestens eine Klassifizierungshinweis mittels einer Texterkennung für mindestens einen Text in dem Plan, einer Symbolerkennung für mindestens ein Symbol in dem Plan, und/oder einer Topologieerkennung für mindestens eine Topologie in den Plan ermittelt. Dementsprechend können unterschiedliche Informationen des Plans, nämlich Texte, Symbole oder Topologien Anhaltpunkte oder Hinweise auf die Eigenschaft des Elementes geben. Ein in dem Plan enthaltener Text "Büro" auf Deutsch oder Englisch oder ein in dem Plan enthaltenes Symbol in Form eines Stuhls oder Schreibtisches lässt auf den Typ des Zimmers als Bürozimmer schließen. Vorteilhafterweise können die Texterkennung, die Symbolerkennung und die Topologieerkennung einzeln als Klassifizierungshinweis oder auch kombiniert verwendet werden. Durch deren Kombination und mindestens zum Teil übereinstimmenden bzw. einheitlichen Bestimmung der mindestens einen unbestimmten Eigenschaft des mindestens einen Elementes, beispielsweise als "Bürozimmer", kann die Zuverlässigkeit der Klassifizierung zusätzlich erhöht werden.

In einer weiteren Ausgestaltung umfasst die Texterkennung für den mindestens einen Text in dem Plan einen Mustervergleich mit regulären Ausdrücken. Dementsprechend wird ein Mustervergleich auf Texten durchgeführt.

In einer weiteren Ausgestaltung basiert die Symbolerkennung für das mindestens eine Symbol in dem Plan auf einem Maschinellem Lernen einer Zuordnung des mindestens einen Symbols in dem Plan zu der mindestens einen unbestimmten Eigenschaft des mindestens einen Elementes, insbesondere einem neuronalen Netz oder einer Support Vector Machine. Dementsprechend wird ein Mustervergleich auf Symbolen durchgeführt.

In einer weiteren Ausgestaltung basiert die Topologieerkennung für die mindestens eine Topologie auf topologischen Mustern, insbesondere einem Mustervergleich auf Graphen. Dementsprechend wird ein Mustervergleich auf Graphen durchgeführt.

In einer weiteren Ausgestaltung wird dem mindestens einen Klassifizierungshinweis mindestens ein Wahrscheinlichkeitswert zugewiesen. Dementsprechend können der Texterkennung, der Symbolerkennung und/oder der Topologieerkennung jeweils Wahrscheinlichkeitswerte oder insgesamt ein Wahrscheinlichkeitswert vergeben werden. Die Wahrscheinlichkeit ermöglicht vorteilhafterweise eine Aussage über die Genauigkeit und Sicherheit der Klassifizierung.

In einer weiteren Ausgestaltung, falls mindestens ein Wahrscheinlichkeitswert des mindestens einen Klassifizierungshinweises mit einem bestimmten Schwellwert übereinstimmt oder diesen bestimmten Schwellwert überschreitet, wird die mindestens eine unbestimmten Eigenschaft des mindestens einen Elementes dem mindestens einen Klassifizierungshinweis zugewiesen, und andere Klassifizierungshinweise des mindestens einen Klassifizierungshinweises entsprechend dem mindestens einen Klassifizierungshinweis werden angepasst.

In einer weiteren Ausgestaltung falls die Wahrscheinlichkeitswerte einer Mehrzahl der Klassifizierungshinweise jeweils einen bestimmten Schwellwert unterschreiten, wird die gewichtete Gesamtwahrscheinlichkeiten aus der Mehrzahl der Wahrscheinlichkeitswerte der Mehrzahl der Klassifizierungshinweise gebildet.

Dementsprechend gibt ein hoher Wahrscheinlichkeitswert Rückschluss auf eine hohe Gewissheit oder Sicherheit der Klassifizierung. Falls einer der Wahrscheinlichkeitswerte der Texterkennung, der Symbolerkennung oder der Topologieerkennung dem Schwellwert von 100% entspricht ist die Eigenschaft mit 100%iger Wahrscheinlichkeit richtig bestimmt. Mit Hilfe der Wahrscheinlichkeitswerte kann das Klassifizierungsergebnis beurteilt oder bewertet werden.

Beispielsweise können die einen oder mehreren Klassifizierungshinweise anhand der Wahrscheinlichkeitswerte einzeln beurteilt werden. Bei einer Übereinstimmung eines oder mehrerer Wahrscheinlichkeitswerte mit dem Schwellwert oder Überschreitung des Schwellwerts, kann der eine oder die mehreren Klassifizierungshinweise verwendet werden. Die anderen oder restlichen Klassifizierungshinweise werden entsprechend angepasst. Alternativ kann aus den Einzelwahrscheinlichkeiten auch eine gewichtete Gesamtwahrscheinlichkeit berechnet werden.

In einer weiteren Ausgestaltung gibt ein Anwender mindestens eine Eingabeinformation für den Klassifizierungshinweis in den Plan ein, insbesondere mittels einer Benutzeroberfläche.

In einer weiteren Ausgestaltung umfasst die Eingabeinformation mindestens einen Text für die Texterkennung, mindestens ein Symbol die Symbolerkennung oder mindestens eine Topologie für die Topologieerkennung.

Dementsprechend kann der Anwender oder Benutzer den Gebäudeplan ändern, insbesondere um zusätzliche Informationen ergänzen oder erweitern. Bei dem Anwender kann es sich beispielsweise um einen Dienstleister oder Experten handeln, der Text oder Symbole zu dem eingelesenen dem Plan hinzufügt. Dies hat sich hinsichtlich der Zuverlässigkeit der Klassifizierung als besonders vorteilhaft erwiesen. Die Gewissheit oder Sicherheit kann zusätzlich erhöht werden.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

Die Erfindung betrifft ferner eine Vorrichtung zur Klassifizierung mindestens eines Elementes mit mindestens einer unbestimmten Eigenschaft, aufweisend:
a. Leseeinheit zum Lesen eines Plans umfassend das mindestens eine Element mit der mindestens einen unbestimmten Eigenschaft und
b. Bestimmungseinheit zum Bestimmen der mindestens einen unbestimmten Eigenschaft des mindestens einen Elementes basierend auf mindestens einem Klassifizierungshinweis.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.
- Figur 1: zeigt ein Ablaufdiagramm zur Darstellung eines Ausführungsbeispiels des erfindungsgemäßen Verfahrens zur Klassifizierung mindestens eines Elementes mit mindestens einer unbestimmten Eigenschaft.
- Figur 2: zeigt eine Detailansicht zur Bestimmung eines Klassifizierungshinweises nach einer Ausführungsform der Erfindung.
- Figur 3: zeigt eine Detailansicht zur Bestimmung eines Klassifizierungshinweises nach einer weiteren Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

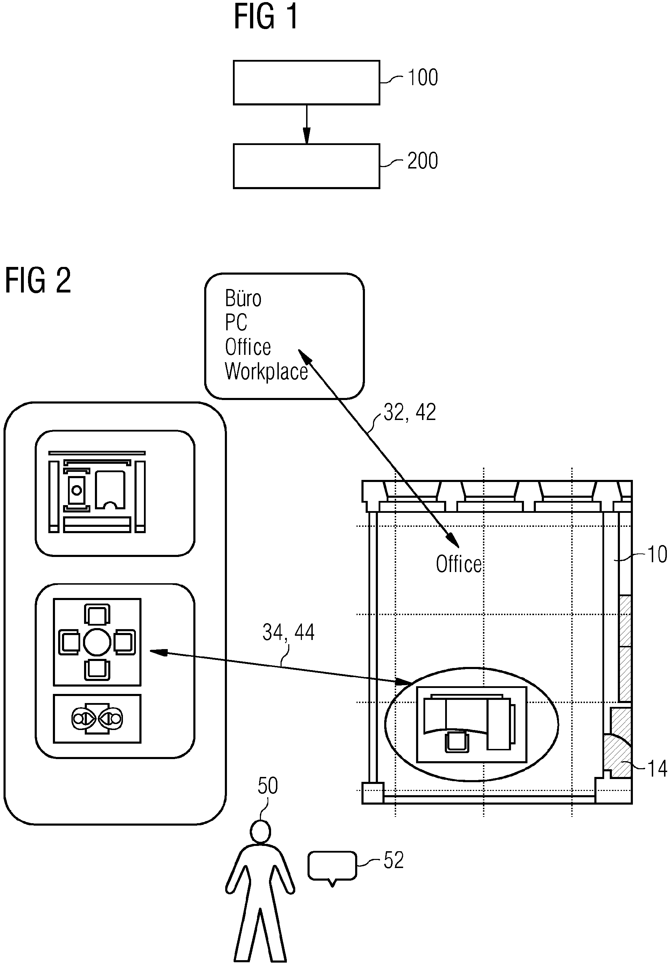

Figur 1 zeigt ein Ablaufdiagramm zur Darstellung des erfindungsgemäßen Verfahrens zur Klassifizierung mindestens eines Elementes 10 mit mindestens einer unbestimmten Eigenschaft. In einem ersten Schritt 100 wird ein Plan 20 eingelesen. Der Plan 20 kann in unterschiedlichen Formaten eingelesen werden, beispielsweise in gedruckter oder digitaler Form. Falls ein gedruckter Plan 20 eingelesen wird, wird dieser in einem Zwischenschritt vor einem zweiten Schritt 200 digitalisiert. Der Plan 20 kann beispielsweise ein Gebäudeplan oder sonstiger Plan sein, welcher die in dem Gebäude enthaltenen Stockwerke mit u.a. den Elementen 10 Räumen oder Zimmern umfasst.

Beispielsweise werden in dem Gebäudeplan 20 zunächst die Räume 10 erkannt. Für jedes Stockwerk kann ein ungerichteter Graph aufgebaut werden, wobei die Knoten des Graphs durch die Räume 10 repräsentiert werden und die Kanten durch die Gänge. Ferner kann ein Raum 10 als Vieleck, wie beispielsweise Polygon, dargestellt werden. Das Polygon ist durch Unterelemente 14 Wände, Fenster und Türen bzw. Gänge begrenzt.

Die Art und Anzahl der Fenster können als Eigenschaft des Raums 10 gespeichert werden. Zusätzlich oder alternativ können weitere Eigenschaften für den Raum 10 extrahiert werden. Die Eigenschaften entsprechen insbesondere den Texten 32 oder abtrennbaren Symbolen 34, die in dem Raum 10 des Gebäudeplans 20 enthalten sind. Der Begriff "abtrennbar" bedeutet, dass ein Symbol 34 in einem Schwarz-Weiß Bild aus zusammenhängenden schwarzen Pixeln besteht. Als zusammenhängend werden die Pixel auch dann angesehen, wenn sie durch eine limitierte Weglänge von weißen Pixeln erreichbar sind.

Der eingelesene Plan 20 wird anschließend in dem zweiten Schritt 200 weiterverarbeitet, um die mindestens eine unbestimmte Eigenschaft des mindestens einen Elementes 10 zu bestimmen. Die eine unbestimmte oder die mehreren unbestimmten Eigenschaften werden basierend auf mindestens einem Klassifizierungshinweis 32, 34, 36 bestimmt. Der Klassifizierungshinweis 32, 34, 36 in Form eines Textes 32, eines Symbols 34 oder einer Topologie 36 kann entsprechend durch eine Texterkennung, Symbolerkennung oder Topologieerkennung auf dem beispielhaften Gebäudeplan erhalten werden.

Beispielsweise kann durch den zweiten Schritt eine unbestimmte Eigenschaft der Raumnutzung oder des Raumtyps eines Raums 10 in einem Gebäudeplan 20 klassifiziert werden. Der Raumtyp wird anhand eines oder mehrerer Klassifizierungshinweise 32, 34, 36, wie Text 32, Symbol 34 oder Topologie 36 bestimmt.

Die Verfahrensschritte 100, 200 werden im Gegensatz zum Stand der Technik nicht manuell durch einen oder mehrere Anwender 50 durchgeführt, sondern automatisch.

In dem Gebäudeplan 20 können Texte 32, Symbole 34 oder Topologien 36 enthalten sein, wie bereits ausgeführt. Für die Texterkennung gemäß Figur 2 werden reguläre Ausdrücke vorgegeben, gegen die die im Gebäudeplan 20 enthaltenen Texte 32 verglichen werden, beispielsweise das Wort "Küche" in verschiedenen Sprachen. Die Texterkennung kann auch als Textvergleich bezeichnet werden. Die Sammlung der Texte 32 und ihre Zuordnung zu Raumtypen kann durch einen oder mehrere Anwender 50 geändert werden. Mit anderen Worten kann durch die Anpassung Seitens des Anwenders 50 die Wahrscheinlichkeit, dass ein bestimmter Ausdruck zusammen mit einem bestimmten Raumtyp auftritt fortlaufend angepasst und folglich erhöht werden oder umgekehrt können auch Raumtypen beim Auftreten bestimmter Symbole ausgeschlossen werden. Dies ist beispielsweise der Fall, wenn der Raumtyp unabhängig von den Texten 32 anhand der Symbole 34 zugeordnet wird.

Beispielsweise wird ein Bürozimmer 10 anhand der enthaltenden Symbole 34 Schreibtisch und Bürostuhl identifiziert. Folglich werden auch in dem Bürozimmer 20 enthaltene Texte 32 wie "Arbeitsplatz", "Telefon", oder "Netzanschluss" etc. mit dem Raumtyp Bürozimmer 10 in Verbindung gebracht.

Für die Symbolerkennung gemäß Figur 2 können neuronale Netze eingesetzt werden. Die Symbolerkennung kann auch als Symbolvergleich bezeichnet werden. Die neuronalen Netze werden darauf trainiert, bestimmte Eigenschaften in den Symbolen 34 wiederzuerkennen und homogene Transformationen der Symbole 34 zu ignorieren, wie beispielsweise Drehen oder Skalieren der Symbole 34. Die Symbole, welche die nicht zweifelsfrei einem bestimmten Raumtyp zugeordnet werden können, können dem Anwender 50 zur manuellen Zuordnung vorgelegt werden. Ferner werden die Symbole 34 den Raumtypen automatisch gemäß unüberwachten Lernverfahren zugeordnet, die mit einer anderen Eigenschaft identifiziert wurden, beispielsweise per Text 32.

Die Zuordnung im Fall der Symbolerkennung wird dementsprechend entweder durch den Anwender 50 vorgegeben oder kann durch die Verknüpfung mit weiteren Klassifizierungsverfahren durchgeführt werden. Beispielsweise wird der Raumtyp bereits anhand der Texterkennung festgelegt. Dadurch können die in dem Raum enthaltenen Symbole dem Raumtyp ebenfalls zugeordnet werden.

In beiden Fällen der Texterkennung und Symbolerkennung kann eine Benutzerinteraktion erfolgen. Beispielsweise können ein oder mehrere Anwender 50 Wahrscheinlichkeiten 52 eingeben. Die Benutzerinteraktion ist insbesondere von Vorteil, wenn die Klassifizierung als eine Applikation über eine Webschnittstelle angeboten wird. In diesem Fall kann die Festlegung der Wahrscheinlichkeiten auf der Erfahrung aller Anwender 50 beruhen. Dementsprechend kann der einzelne Anwender 50 der Applikation von den Erfahrungen der anderen Anwender 50 profitieren. Der Anwender 50 kann im Ausgleich seine Erfahrung in Form der Wahrscheinlichkeiten zur Verfügung stellen. Die eingegebenen Wahrscheinlichkeiten können ferner zentral bewertet und zu einer Gesamtwahrscheinlichkeit zusammengefasst werden. Die Anwender, welche bereits viele Projekte bearbeitet haben und erfahren sind, können besser bewertet werden unerfahrene Anwender.

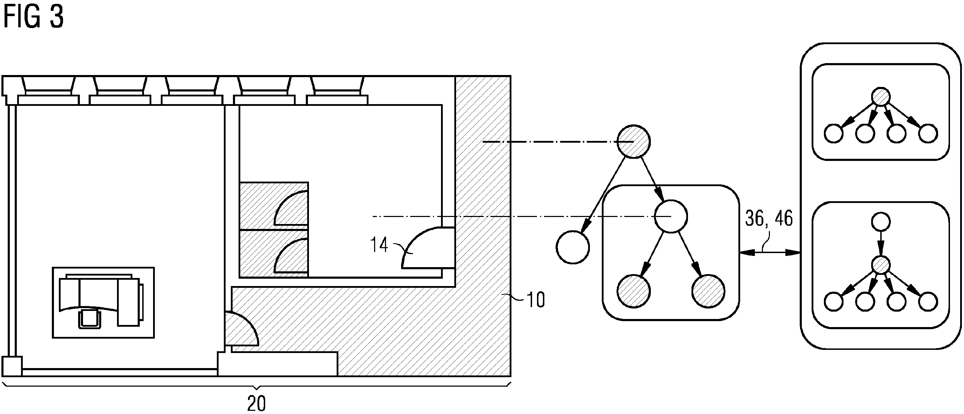

Ferner können gemäß Figur 3 auch Topologien 36 für die Topologieerkennung abgespeichert und ausgewertet werden. Beispielsweise ist ein Gang mit vielen Räumen 10 verbunden und hat wenig Fenster. Im Unterschied zur Texterkennung und Symbolerkennung ist keine Benutzerinteraktion vorgesehen, da es sich nicht um offensichtlich interpretierbare Eigenschaften handelt und auch die Anzahl der Muster beschränkt ist. Jedoch werden die Wahrscheinlichkeiten für das Auftreten dieser Muster auch automatisch angepasst. Topologische Muster können u.a. von Normen oder Arbeitsschutzregelungen abgeleitet werden. Beispielsweise können die Vorgaben Informationen darüber enthalten, dass auf jedem Stockwerk mindestens ein Aufenthaltsraum eingeplant wird oder dass Bürozimmer eine bestimme Fläche haben sowie Tageslicht-Fenster verfügen etc. Dementsprechend können ferner Plausibilitätschecks durchgeführt und Warnungen generiert werden, beispielsweise falls auf einem Stockwerk nur Küchen und Waschräume erkannt werden.

Im Fall der Topologieerkennung können dementsprechend Teilgraphen als Muster hinterlegt werden, nach denen in einem Gesamtgraph gesucht wird. Ein Gang in einem Gebäude ist beispielsweise ein innerer Knoten, der mehrere direkte Kinder hat.

Ein oder mehrere Klassifizierungshinweise 32, 34, 36 können für die Klassifizierung des mindestens einen Elementes 10 herangezogen werden. Führt ein Klassifizierungshinweis 32, 34, 36 mit 100%iger Wahrscheinlichkeit 42 zum Raumtyp durch das Auftreten des Textes 32 "Küche", wird dieser Raumtyp "Küche" dem Raum 10 zugewiesen. Der Raum wird folglich als Küche klassifiziert. Ferner werden die Wahrscheinlichkeiten 44, 46 der restlichen Klassifizierungshinweise 34, 36 entsprechend angepasst.

Liegt die jeweilige Wahrscheinlichkeit 42, 44, 46 der Mehrzahl der Klassifizierungshinweise 32, 34, 36 unter 100%, wird aus den Einzelwahrscheinlichkeiten 42, 44, 46 der Klassifizierungshinweise 32, 34, 36 eine gewichtete Gesamtwahrscheinlichkeit gebildet. Falls die Gesamtwahrscheinlichkeit einen bestimmten Schwellwert überschreitet, wird der Raumtyp zugewiesen. Andernfalls wird der Raum dem Anwender 50 zur manuellen Beurteilung präsentiert.

Dementsprechend können mittels der Wahrscheinlichkeiten Korrelationen dargestellt werden. Beispielsweise kann ein Raumtyp anhand eines Textes zu 100% zugeordnet werden. Die Klassifizierung anhand der enthaltenden Symbole liefert hingegen nur eine Anfangswahrscheinlichkeit von beispielsweise 30%.

Falls der Text mit einer Wahrscheinlichkeit von 100% zusammen mit dem entsprechenden Symbol gefunden wird, kann die Zuverlässigkeit des Symbols automatisch erhöht werden. Umgekehrt kann bei einer falschen Zuordnung des Symbols die Wahrscheinlichkeit auch verringert werden. Nach einer Trainingsphase ist das System in der Lage die Klassifizierung mit einem ausreichend hohen Prozentsatz ausschließlich anhand der Symbole vorzunehmen.

Ferner können Teile der Klassifizierung im Vergleich zum Stand der Technik automatisch bewertet werden, beispielsweise wenn anhand des Texts "Büro", der Raum eindeutig als Büro klassifiziert wurde, können zusätzliche Klassifizierungsarten automatisch verbessert werden. Falls der Raum zunächst unbekannte Elemente enthält, wie beispielsweise ein atomares Symbol für einen Tisch mit einem Stuhl und einem Computer etc., können diese Elemente ohne Hilfe des Anwenders mit dem Raumtyp "Büro" in Verbindung gebracht werden. Falls danach in einem Raum entsprechende Elemente gefunden werden - Tisch und Computer - und ein beschreibender Text fehlt, kann der Raum dennoch mit hoher Wahrscheinlichkeit als Büro klassifiziert werden.

Das Verfahren kann bei einer möglichen Ausführungsform durch ein Computerprogramm implementiert sein, welches Computerbefehle enthält, die durch einen Mikroprozessor ausgeführt werden können. Dieses Programm wird bei einer möglichen Ausführungsform auf einem Datenträger oder in einem Programmspeicher gespeichert.

## Patentansprüche

1. Computer-implementiertes Verfahren zur Klassifizierung mindestens eines Elementes (10) mit mindestens einer unbestimmten Eigenschaft, aufweisend die folgenden Schritte:
a. Lesen (100) eines Plans (20) umfassend das mindestens eine Element (10) mit der mindestens einen unbestimmten Eigenschaft und
b. Bestimmen (200) der mindestens einen unbestimmten Eigenschaft des mindestens einen Elementes (10) basierend auf mindestens einem Klassifizierungshinweis (32, 34, 36).

2. Computer-implementiertes Verfahren nach Anspruch 1, wobei der Plan (20) ein Plan in gedruckter Form oder ein Plan in digitaler Form ist.

3. Computer-implementiertes Verfahren nach Anspruch 2, weiterhin aufweisend den Schritt Digitalisieren des Plans (20) in gedruckter Form in einen Plan (20) in digitaler Form nach Schritt a., falls der Plan (20) in gedruckter Form eingegeben wird.

4. Computer-implementiertes Verfahren nach einem der vorhergehenden Ansprüche, wobei die mindestens eine Eigenschaft ausgewählt aus der Gruppe bestehend aus einem Typ des mindestens einen Elementes (10), Typ mindestens eines Unterelementes (14) des mindestens einen Elementes (10) und einer Anzahl des mindestens einen Unterelementes (14) ist.

5. Computer-implementiertes Verfahren nach einem der vorhergehenden Ansprüche, wobei der mindestens eine Klassifzierungshinweis (32, 34, 36) mittels
- einer Texterkennung für mindestens einen Text (32) in dem Plan (20),
- einer Symbolerkennung für mindestens ein Symbol (34) in dem Plan (20), und/oder
- einer Topologieerkennung für mindestens eine Topologie (36) in den Plan (20)
ermittelt wird.

6. Computer-implementiertes Verfahren nach Anspruch 5, wobei die Texterkennung für den mindestens einen Text (32) in dem Plan (20) einen Mustervergleich mit regulären Ausdrücken umfasst.

7. Computer-implementiertes Verfahren nach Anspruch 5, wobei die Symbolerkennung für das mindestens eine Symbol (34) in dem Plan (20) auf einem Maschinellem Lernen einer Zuordnung des mindestens einen Symbols (34) in dem Plan (20) zu der mindestens einen unbestimmten Eigenschaft des mindestens einen Elementes (10) basiert, insbesondere einem neuronalen Netz oder einer Support Vector Machine.

8. Computer-implementiertes Verfahren nach Anspruch 5, wobei die Topologieerkennung für die mindestens eine Topologie (36) auf topologischen Mustern, insbesondere einem Mustervergleich auf Graphen basiert.

9. Computer-implementiertes Verfahren nach einem der vorhergehenden Ansprüche 5 - 8, wobei dem mindestens einen Klassifizierungshinweis (32, 34, 36) mindestens ein Wahrscheinlichkeitswert (42, 44, 46) zugewiesen wird.

10. Computer-implementiertes Verfahren nach Anspruch 9, wobei
- falls mindestens ein Wahrscheinlichkeitswert (42, 44, 46) des mindestens einen Klassifizierungshinweises (32, 34, 36) mit einem bestimmten Schwellwert übereinstimmt oder diesen bestimmten Schwellwert überschreitet, wird die mindestens eine unbestimmten Eigenschaft des mindestens einen Elementes (10) dem mindestens einen Klassifizierungshinweis (32, 34, 36) zugewiesen, und andere Klassifizierungshinweise (32, 34, 36) des mindestens einen Klassifizierungshinweises (32, 34, 36) entsprechend dem mindestens einen Klassifizierungshinweis (32, 34, 36) werden angepasst.

11. Computer-implementiertes Verfahren nach Anspruch 9, wobei
- falls die Wahrscheinlichkeitswerte (42, 44, 46) einer Mehrzahl der Klassifizierungshinweise (32, 34, 36) jeweils einen bestimmten Schwellwert unterschreiten, die gewichtete Gesamtwahrscheinlichkeiten aus der Mehrzahl der Wahrscheinlichkeitswerte (42, 44, 46) der Mehrzahl der Klassifizierungshinweise (32, 34, 36) gebildet wird.

12. Computer-implementiertes Verfahren nach einem der vorhergehenden Ansprüche, wobei ein Anwender (50) mindestens eine Eingabeinformation (52) für den Klassifizierungshinweis (32, 34, 36) in den Plan (20) eingibt, insbesondere mittels einer Benutzeroberfläche.

13. Computer-implementiertes Verfahren nach Anspruch 12, wobei die Eingabeinformation (52) mindestens einen Text für die Texterkennung, mindestens ein Symbol die Symbolerkennung oder mindestens eine Topologie für die Topologieerkennung umfasst.

14. Computerprogrammprodukt mit einem Computerprogramm, das Mittel zur Durchführung des Verfahrens nach einem der Ansprüche 1 bis 13 aufweist, wenn das Computerprogramm auf einer programmgesteuerten Einrichtung zur Ausführung gebracht wird.

15. Vorrichtung zur Klassifizierung mindestens eines Elementes (10) mit mindestens einer unbestimmten Eigenschaft, aufweisend:
a. Leseeinheit zum Lesen (100) eines Plans (20) umfassend das mindestens eine Element (10) mit der mindestens einen unbestimmten Eigenschaft und
b. Bestimmungseinheit zum Bestimmen (200) der mindestens einen unbestimmten Eigenschaft des mindestens einen Elementes (10) basierend auf mindestens einem Klassifizierungshinweis (32, 34, 36).
